Europäisches Patentamt

European Patent Office

Office européen des brevets

(19)

(11) **EP 1 564 644 A1**

(12) **EUROPEAN PATENT APPLICATION**

(43) Date of publication:
**17.08.2005 Bulletin 2005/33**

(51) Int Cl.⁷: **G06F 15/02**

(21) Application number: **04425095.9**

(22) Date of filing: **13.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **SM Elettrotecnica di Spanu Matteo
09010 Pula (CA) (IT)**

(72) Inventors:
• **Spanu, Matteo
   09018 Pula (CA) (IT)**
• **Betti, Nicola
   09018 Sarroch (CA) (IT)**

(74) Representative: **Mittler, Enrico et al
Mittler & C. s.r.l.,
Viale Lombardia, 20
20131 Milano (IT)**

(54) **Calculating device for electricians**

(57)     There is disclosed a calculating device for electricians, which comprises portable shock-proof box-like casing (1) formed by a base (2) and an openable and closable cover (3). Said casing (1) includes an alphanumeric display (6), a keyboard (7) comprising alphanumeric keys (8) and function keys (9), and a processing unit (13) which according to the function selected by said function keys (9) and the data introduced by said alphanumeric keys (8) carries out electric plant sizing calculations and shows them on said alphanumeric display (6). An additional display (16) may be provided for visualizing measures of voltage, current, resistance, temperature and so by means of points which can be introduced into suitable sockets (14, 15)

FIG.1

**EP 1 564 644 A1**

**Description**

The present invention relates to a calculating device for electricians and every other technician of the same field, which is planned to calculate the size of electrical cables, magneto-thermic and differential magnet thermic devices and so on.

It often happens for urgency or hurry reasons to carry out electric plants without having a predefined design. In such situation of emergency or low reliability of sizing, carried out on the basis of approximate parameters only, there is the risk that the electrical cables, the magneto-thermic devices and their users suffer damages which could be irreparable. In case of undersized electrical cables their fusion could occur and a fire could start, while, as regards the sizing of the magneto-thermic devices, if undersized with respect to the power required by the plant, a continuous interruption of the electric power could occur whereas, if oversized, there would be no protection of the electric plant with imaginable consequences (beginning fire due to fusion of electric cables and so on).

In the market there already exist very complex programs for carry out sizing of electric plants by means of fixed and portable PCs, which are used by planning professionals. These presently used means however have high costs and are of low convenience in the building place and for their use by a common electrician.

In view of these demands made in the building places, the object of the present invention has been to provide a calculating device which is specific for electricians, of light weight and small-sized (pocket-sized), having calculating and electric sizing programs residing in the firmware of the calculating device, with dedicated guide keys for introduction of calculation data, which is respectful of the rules in force in the electrical field and is of very easy use by any user even if not professional in the field, included the inspection technicians of the sanitary authorities, who have to check rapidly the size of the plant.

To this end the calculating device according to the present invention is characterized by comprising a portable shock-proof box-like casing formed by a base and an openable and closable cover, said casing including an alphanumeric display, a keyboard comprising alphanumeric keys and function keys, and a processing unit which according to the function selected by said function keys and the data introduced by said alphanumeric keys carries out electric plant sizing calculations and shows them on said alphanumeric display.

The calculating device for electricians according to the invention represents a low cost, reliable and easily usable instrument, which is destined to have a high marketing value as usable by all those electricians who up to now have sized the electric plants in a completely approximate manner and by using it can now calculate and size the plants in rapid and very precise manner and according to the rules.

The features of the present invention and its modes of use will be made evident by the following detailed description of two possible embodiments thereof which are illustrated by way of non-limiting example in the accompanying drawings, wherein:

Figure 1 shows a possible embodiment of the calculating device for electricians according to the present invention;
Figure 2 shows a functional block diagram of the calculating device according to the invention;
Figure 3 shows a possible flow chart relating to the choice and sizing of electrical cables by using the calculating device according to the invention;
Figure 4 shows in more detailed way the part of said flow chart which is concerned with the introduction of the initial data;
Figure 5 shows an alternative embodiment of the calculating device according to the invention.

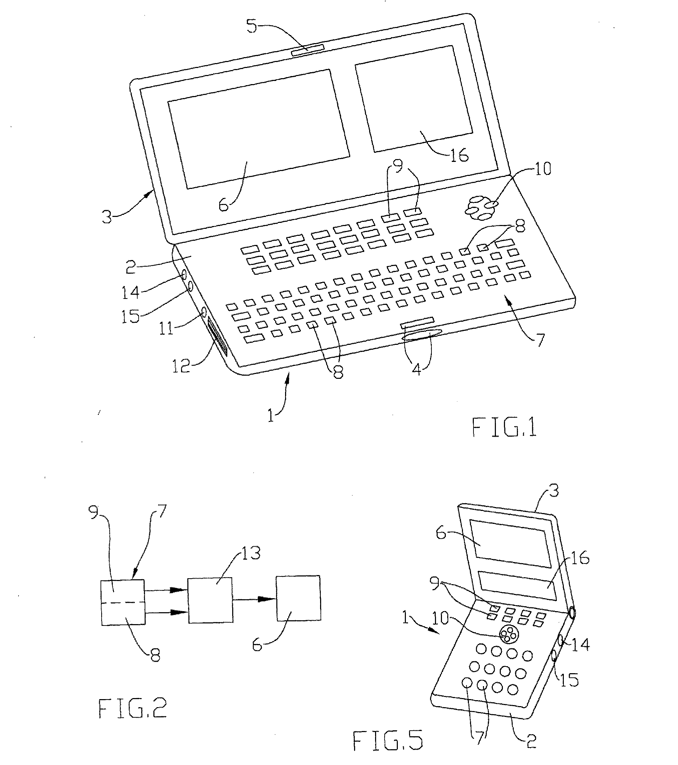

As shown in Fig. 1, a calculating device according to the present invention comprises a portable shock-proof box-like casing 1, which is composed by a base 2 and a turnable cover 3 which is lockable in closed position by means of locking stops 4 and 5.

The base 2 includes a keyboard 7 comprising alphanumeric keys 8 and function keys 9, as well as keys 10 for moving a slider inside a display 6 included in the cover 3 (or, as an alternative, in the base 2). The function keys 9 may be of various shape and nature, usable for selecting normal calculation functions (addition, subtraction, multiplication, division, percent and so on) and special calculation functions, or as switching on, switching off, reset, last digit cancellation, and so on.

The calculation device is destined to operate by cell but a terminal 11 is however provided for connection to an electrical power socket. The use of solar supply by means of photovoltaic minicells of any nature and form can also be assumed.

One or more knobs 12 for adjustment of the brightness and contrast of the display 6 are also provided.

Inside the base 2 there is a processing unit 13 (substantially, a microprocessor with proper software) which receives alphanumeric and function data from the keyboard 7, carries out the necessary size calculations and show them on the display 6.

If desired, the calculating device can also have the function of voltmeter-amperometer-ohmeter, continuity meter with buzzer and temperature meter so as to constitute a single multifunction instrument which can be used easily by the electrician during its work of calculation, installation, measurement and verification. In that case the calculation device will be provided with sockets 14 and 15 for detection and measurement test points and an additional display 16 for the indication of voltage, current, resistance, temperature and so on. The two displays 6 and 16 may also form a single display with alphanumeric strings of calculation, measurement of voltage, current and resistance. An analogue/digital converter (not shown) will be interposed between the sockets 14 and 15 and the display 16.

Sockets for connection to printers and other peripheral units may also be provided.

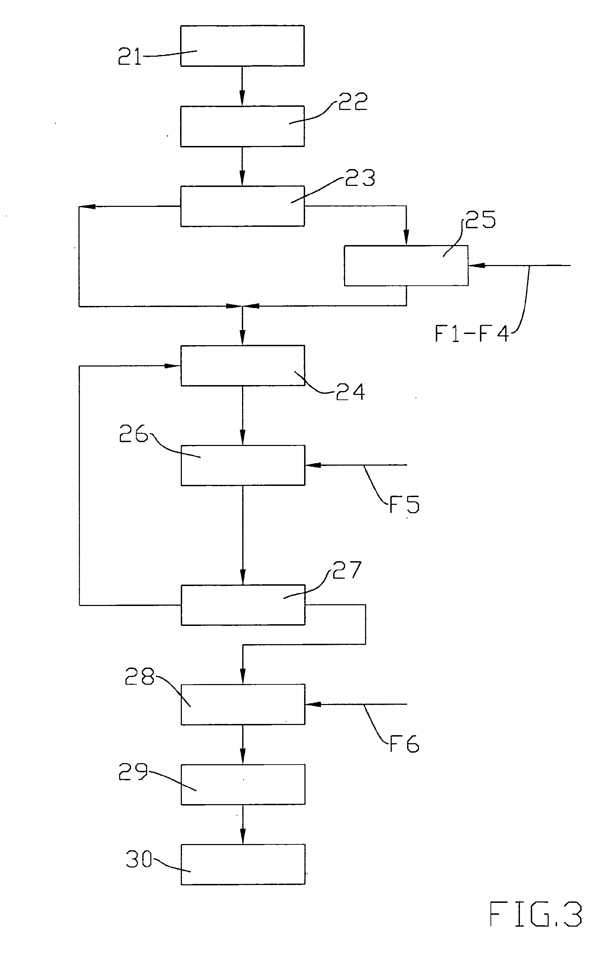

A mode of use of the calculating device according to the invention can be understood from the flow chart of Fig. 3, wherein the block 21 indicates the beginning of the sizing operation and the block 22 indicates the step of introduction of the initial data, which can be carried out by means of the alphanumeric keys 8 within suitable areas of one or more video images of the display 6.

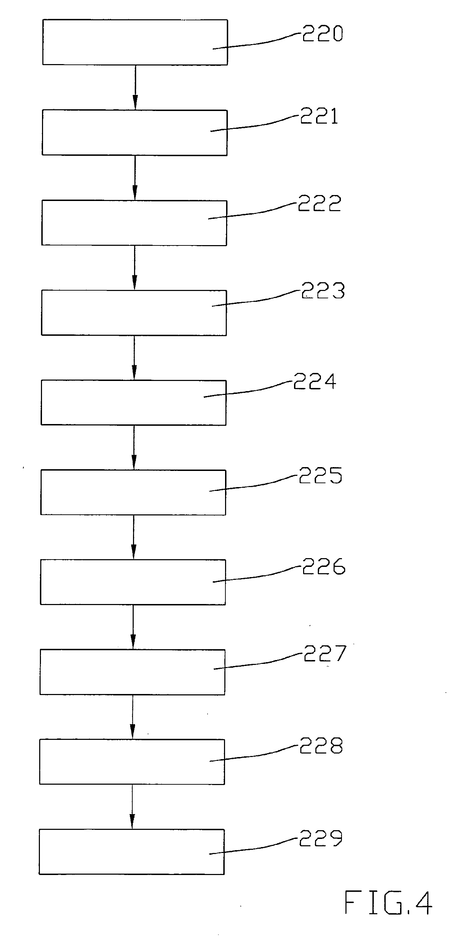

The block 22 is illustrated in more detailed way in Fig. 4 and comprises a block 220 for the introduction of the value of the operation voltage, a block 221 for the selection between a mono/two-phase circuit and a three-phase circuit, a block 222 for the indication of the operation frequency (for example, 50 Hz), a block 223 for the introduction of the length of the cable, a block 224 for the introduction of the data relating to the type of cable (unifilar PVC cable isolated without sheath, PVC cable with double isolation with sheath, rubber EPR (butyl) cable isolated without sheath, rubber EPR (butyl) cable with double isolation, a block 225 for the introduction of data relating to the type of laying (external piping - embedded piping - horizontal channel - vertical channel - floor channel - prebored gangway - gangway brackets with crossbeams - thread suspension), a block 226 for the indication of the number of circuits or cables adjacent the cable to be laid, a block 227 for the introduction of the load or user characteristics (absorbed power, nominal current), a block 228 for the indication of the power factor (which can be considered equal to 0.85 if unknown), a block 229 for the indication of the maximum percent voltage drop of the electric line (for example 4% if unknown).

The block 23 (Fig. 3) follows wherein a distinction is made according to whether the operation current of the cable is known or not. In the first case one passes directly to the subsequent block 24; otherwise, through the block 25, the calculation of the above said current is carried out by using, through the function keys 9, one or another of the formulas F1, F2, F3, F4 quoted hereinbelow:

- if the technical data of the load or the user (active power, voltage, cos φ) are known

    - for a mono/two-phase circuit

$$F1 \qquad I = \frac{Patt}{V \cdot \cos\varphi}$$

    - for a three-phase circuit

$$F2 \qquad I = \frac{Patt}{(\sqrt{3}\cdot V\cdot\cos\varphi)}$$

   where

   $Patt$ : active power
   $V$ : linked voltage
   $\cos\varphi$ : load power factor (considered equal to 0.85 if unknown)

- if the apparent power and the voltage are known

    - for a mono/two-phase circuit

$$F3 \qquad I = \frac{Papp}{V}$$

    - for a three-phase circuit

$$F4 \qquad I = \frac{Papp}{\sqrt{3}\cdot V}$$

The block 24 allows to determine the cross-section of the cable according to the type of cable and the type of laying and on the basis of some current rate / cross-section tables stored in the processing unit 13.

The subsequent block 26 in turn calculates the percent voltage drop ΔV% according to the formula F5 quoted herein below, selected by means of a function key 9:

$$F5 \qquad \Delta V\% = d \cdot I \cdot L \ [(1.25 \cdot r \cdot \cos\varphi)/(S \cdot n) + (X/n) \cdot \sqrt{(1- \cos\varphi^2)}] \cdot 100/V$$

where:

| | |
|---|---|
| $d$ | : factor depending on the type of circuit $d = \sqrt{3}$ for a.c. three-phase circuits $d = 2$ for a.c mono/two-phase circuits |
| $I$ | : nominal operation current of the cable |
| $L$ | : length of the cable or pipe |
| $r$ | : resistivity of the conductor at environmental temperature |
| $\cos \varphi$ | : power factor of the line |
| $S \cdot n$ | : cross-section of the conductor by the number of conductors per phase |
| $X$ | : linear reactance of the conductor = 0.08 mΩ/m |
| $V$ | : nominal linked voltage |

In the case of copper conductors only, the formula F5 becomes:

$$\Delta V\% = d \cdot I \cdot L \ [(0,0225 \cdot \cos\varphi)/(S \cdot n) + (0,08/1000) \cdot \sqrt{(1-\cos\varphi^2)} \ ] \cdot 100/V$$

The subsequent block 27 verifies whether the calculated voltage drop is lower than the maximum admitted voltage. In case of negative answer a cable of larger cross-section is chosen and the voltage calculation in the block 26 is carried out again. In case of positive answer, instead, one passes to the block 28.

The block 28 calculates the power lost by the cable according to the formula F6 quoted hereinbelow, selected by means of a function key 9:

$$F6 \qquad P = d' \cdot I^2 \cdot [1,25 \cdot r \ / \ (S \cdot n)] \cdot L$$

where:

| | |
|---|---|
| $d'$ | : factor depending on the type of circuit $d' = 3$ for three-phase circuits $d' = 2$ for mono/two-phase circuits |
| $I$ | : nominal operation current of the cable |
| $r$ | : conductor resistivity of the cable at environmental temperature |
| $n$ | : cross-section of the conductor by the number of conductors |

In the case of copper conductors only, the formula F6 becomes:

$$P = d' \cdot I^2 \cdot [0,022 \ / \ (S \cdot n)] \cdot L$$

The subsequent block 29 calculates through a further formula introduced by means a function key 9 the maximum rating value of the magnetic switch of the circuit formed with the cables the size of which has been previously calculated.

The final block 30 is finally representative of the presentation of the results on the display 6. In particular, the values of cross-section of the cable, percent voltage drop, voltage drop, thermic protection of the cable and dissipated power are shown.

In an alternative embodiment thereof the calculating device according to the invention may have the physical shape of a cellular telephone, particularly of the type with opening and closing as a shell, as shown in Figure 5, where the same reference numbers indicate parts similar to those in Figure 1.

**EP 1 564 644 A1**

**Claims**

1. Calculating device for electricians, **characterized by** comprising a portable shock-proof box-like casing (1) formed by a base (2) and an openable and closable cover (3), said casing (1) including an alphanumeric display (6), a keyboard (7) comprising alphanumeric keys (8) and function keys (9), and a processing unit (13) which according to the function selected by said function keys (9) and the data introduced by said alphanumeric keys (8) carries out electric plant sizing calculations and shows them on said alphanumeric display (6).

2. Calculating device for electricians according to claim 1, **characterized in that** it is supplied by cell.

3. Calculating device for electricians according to claim 1, **characterized in that** it is provided with solar supply through photovoltaic minicells.

4. Calculating device for electricians according to anyone of claims 1-3, **characterized in that** it is provided with a terminal (11) for its connection to an electric supply socket.

5. Calculating device for electricians according to anyone of claims 1-4, **characterized in that** said function keys (9) are usable for the selection of calculation formulas.

6. Calculating device for electricians according to claim 5, **characterized in that** said function keys (9) are usable for the selection of formulas for calculating the operation current in cables.

7. Calculating device for electricians according to claim 5, **characterized in that** said function keys (9) are usable for the selection of formulas for calculating the percent voltage drop in cables.

8. Calculating device for electricians according to claim 5, **characterized in that** said function keys (9) are usable for the selection of formulas for calculating the power dissipated by the cable.

9. Calculating device for electricians according to claim 5, **characterized in that** said function keys (9) are usable for the selection of arithmetical calculation formulas such as addition, subtraction, multiplication, division, percent and so on.

10. Calculating device for electricians according to claim 1, **characterized in that** said function keys (9) comprise keys for switching on, switching off, last digit cancellation, reset and so on.

11. Calculating device for electricians according to anyone of the preceding claims, **characterized in that** said keyboard (7) further comprises keys (10) for moving a slider inside the display (6).

12. Calculating device for electricians according to anyone of the preceding claims, **characterized in that** it comprises sockets (14, 15) for the connection of points for measuring voltage, current, resistance, temperature, continuity and so on.

13. Calculating device according to claim 12, **characterized in that** said box-like casing (1) includes an additional display (16), or part of display, for visualizing measures of voltage, current, resistance, temperature, continuity and so on.

14. Calculating device according to anyone of the preceding claims, **characterized in that** said box-like casing (1) has the shape of a cellular telephone.

15. Calculating device according to claim 12, **characterized in that** said cellular telephone is of the type with opening and closing as a shell.

FIG.1

FIG.2

FIG.5

FIG.3

FIG.4

**European Patent Office**

## EUROPEAN SEARCH REPORT

Application Number

EP 04 42 5095

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/016925 A (LIPSCOMB EDWARD E ; FRANZ MARTIN (US); LIEBL TROY (US); RAICHLE KURT () 27 February 2003 (2003-02-27) | 1-15 | G06F15/02 |
| Y | * page 1, line 1 - page 5, line 7 * | 12,13 | |
| X | EP 0 306 063 A (LAITRAM CORP) 8 March 1989 (1989-03-08) | 1-11,14, 15 | |
| Y | * column 1, line 1 - column 2, line 52 * | 12,13 | |
| X | US 6 459 968 B1 (KOCHIE ROBERT) 1 October 2002 (2002-10-01) | 1-11,14, 15 | |
| A | * column 1, line 7 - column 2, line 32 * | 12,13 | |

| | |
|---|---|
| | **TECHNICAL FIELDS SEARCHED** (Int.Cl.7) |
| | G06F |
| | G01R |

The present search report has been drawn up for all claims

| Place of search | Date of completion of the search | Examiner |
|---|---|---|
| Munich | 30 November 2004 | Lo Turco, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 564 644 A1

**ANNEX TO THE EUROPEAN SEARCH REPORT
ON EUROPEAN PATENT APPLICATION NO.**

EP 04 42 5095

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2004

| Patent document cited in search report | | | Publication date | Patent family member(s) | | | Publication date |
|---|---|---|---|---|---|---|---|
| WO 03016925 | A | | 27-02-2003 | WO | 03016925 | A1 | 27-02-2003 |
| | | | | US | 2003034769 | A1 | 20-02-2003 |
| EP 0306063 | A | | 08-03-1989 | CA | 1307351 | C | 08-09-1992 |
| | | | | DE | 3851021 | D1 | 15-09-1994 |
| | | | | DE | 3851021 | T2 | 26-01-1995 |
| | | | | EP | 0306063 | A2 | 08-03-1989 |
| | | | | JP | 1072257 | A | 17-03-1989 |
| | | | | US | 5289394 | A | 22-02-1994 |
| | | | | US | 5245559 | A | 14-09-1993 |
| US 6459968 | B1 | | 01-10-2002 | US | D442101 | S1 | 15-05-2001 |

EPO FORM P0459

For more details about this annex : see Official Journal of the European Patent Office, No. 12/82

10